(19) Europäisches Patentamt
European Patent Office
Office européen des brevets

(11) Numéro de publication : **0 011 577**
**B1**

(12) # FASCICULE DE BREVET EUROPÉEN

(45) Date de publication du fascicule du brevet : **01.06.83**

(51) Int. Cl.³ : **C 09 D 3/74**, C 08 L 29/14, C 03 C 27/06

(21) Numéro de dépôt : **79400887.0**

(22) Date de dépôt : **20.11.79**

(54) **Polyvinylbutyral plastifié, application à la réalisation d'intercalaires pour vitrages feuilletés de sécurité et produits ainsi obtenus.**

(30) Priorité : **21.11.78 FR 7832737**

(43) Date de publication de la demande : **28.05.80 Bulletin 80/11**

(45) Mention de la délivrance du brevet : **01.06.83 Bulletin 83/22**

(84) Etats contractants désignés : **AT BE DE FR GB IT LU NL SE**

(56) Documents cités : **CHEMICAL ABSTRACTS, vol. 86, no. 6, 7 février 1977, page 34, abrégé 30536x. Columbus, Ohio, USA**

(73) Titulaire : **SAINT-GOBAIN INDUSTRIES**
**62, Bd Victor Hugo**
**F-92209 Neuilly sur Seine (FR)**

(72) Inventeur : **Dages, Daniel**
**Résidence P. Curie 3, allée des Mésanges**
**F-78130 Les Mureaux (FR)**

(74) Mandataire : **Eudes, Marcel et al**
**Saint-Gobain Recherche 39 Quai Lucien Lefranc**
**F-93304 Aubervilliers Cedex (FR)**

**EP 0 011 577 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Polyvinylbutyral plastifié, application à la réalisation d'intercalaires pour vitrages feuilletés de sécurité et produits ainsi obtenus

L'invention concerne de nouveaux plastifiants pour polyvinylbutyral. L'invention concerne également l'application du polyvinylbutyral ainsi plastifié à la réalisation de feuilles transparentes, notamment d'intercalaires pour vitrages feuilletés de sécurité.

Le polyvinylbutyral plastifié est largement utilisé comme couche intercalaire dans les pare-brises de sécurité et dans certaines applications architecturales (vitrines, etc...). Bien que la technique enseigne un très grand nombre de plastifiants pour le polyvinylbutyral (en abrégé PVB), seuls quelques-uns sont largement utilisés dans les applications du PVB comme couche intercalaire de vitrages de sécurité. Une des raisons en est que le PVB est une résine dont les molécules polymérisées présentent de grandes variations dans la quantité de groupements butyral, hydroxyles et acétates résiduels qu'elles contiennent, ainsi que dans les masses moléculaires.

En premier lieu, il est bien connu que la teneur possible en certains plastifiants varie avec la teneur en groupements hydroxyles résiduels de la résine. Parmi les plastifiants connus et usuels, beaucoup sont donc incompatibles ou seulement partiellement compatibles avec la résine de PVB. L'incompatibilité la plus typique est l'exsudation de plastifiant dans le PVB plastifié.

En outre, pour diverses raisons, bien des plastifiants compatibles avec le PVB ne fournissent pas les propriétés exigées dans les applications aux vitrages feuilletés de hautes performances. En effet, ces verres feuilletés doivent posséder non seulement une bonne qualité optique mais aussi des propriétés de bonne résistance au choc, mêmes aux températures extrêmes, et de résistance à la déstratification ou décollement des feuilles entre elles.

Ainsi, les diesters d'acides dicarboxyliques sont des plastifiants connus pour le polyvinylbutyral, particulièrement ceux dont le diacide contient 4 à 14 atomes de carbone et notamment les adipates. La fraction alcool de l'ester est formée de radicaux alkyles ou alkoxyalkyles contenant moins de 12 atomes de carbone. US-A-2 124 315 et 3 884 865 mentionnent par exemple les adipates de méthyle, éthyle, propyle, butyle, pentyle, hexyle, octyle. La compatibilité des adipates avec le PVB est partielle ; elle est d'autant plus faible que la teneur en hydroxyles de la résine augmente, ou que la masse moléculaire du plastifiant adipate croît. Enfin, les plastifiants dont la tension de vapeur est supérieure à 10 mm de Hg à 175 °C ont tendance à produire dans le feuilleté résultant des bulles, une déstratification ou d'autres défauts.

D'autre part, la technique enseigne que les plastifiants du type ester carboxylique de glycols ou ester dialkylique ou alcoxyalkylique d'acide dicarboxylique donnent une bonne flexibilité aux basses températures, mais qu'il n'en est pas de même des produits comme les phtalates contenant des groupements polarisables tels que les noyaux benzéniques.

Parmi les publications relatives à de tels plastifiants, on mentionnera en particulier :

— « Kunststoffe », volume 60 (1970), pages 301 à 308, qui concerne plus particulièrement les plastifiants de polychlorure de vinyle ;

— US-A-2 290 193, relatif aux plastifiants de polyvinylacétal ;

— « International Polymer Service and Technology », volume 2 (1978), page 90 à 106, qui se rapporte aux plastifiants du caoutchouc.

La présente invention permet d'obtenir des vitrages feuilletés améliorés en fournissant des intercalaires en polyvinylbutyral utilisables pour les vitrages feuilletés de sécurité de hautes performances. Sous un des aspects de l'invention, le polyvinylbutyral plastifié comprend un plastifiant comprenant un adipate d'alkyle et de benzyle de formule générale

$C_nH_{2n+1}—COO—(CH_2)_4—COO—CH_2—$ 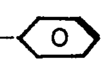

n étant compris entre 4 et 10.

On utilise par exemple l'adipate de benzyle et de butyle (BBA), l'adipate de benzyle et d'octyle (BOA), l'adipate de benzyle et d'hexyle (BHA), l'adipate de benzyle et de décyle (BDA).

En effet, d'une manière surprenante et contrairement à ce qui était admis jusqu'à présent, les adipates contenant un groupement benzyle dans leur molécule ont une meilleure compatibilité que les adipates dialkyliques usuels et donnent de bonnes propriétés à basse température.

Sous un des aspects de l'invention, les résines de polyvinylbutyral pouvant être plastifiées sont de préférence préparées comme il est dans FR-A-2 401 941. Leur masse moléculaire est comprise entre 30 000 et 600 000, leur chaîne moléculaire contient de 12 à 25 % en poids de groupements hydroxyles, une teneur en groupements acétates inférieure à 5 %, le reste étant essentiellement de l'acétal de butyraldéhyde. La quantité de plastifiant dépend des particularités indiquées ci-dessus de la résine et, pour une application déterminée, le spécialiste pourra la déterminer sans peine.

On rappelle que la publication précitée décrit plus précisément un procédé de préparation de polyvinylbutyral par réaction d'alcool polyvinylique (PVA) en solution aqueuse et d'aldéhyde butyrique, selon lequel ladite solution aqueuse comprend entre 8 et 15 % en poids d'alcool polyvinylique, on y incorpore un catalyseur acide et un émulsifiant, on introduit dans le mélange ainsi obtenu, maintenu

entre 5 et 12 °C et sous agitation, de l'aldéhyde butyrique en quantité suffisante pour réagir avec 75 à 88 % de l'alcool polyvinylique du mélange, l'introduction de l'aldéhyde butyrique s'effectuant progressivement pendant une durée telle que le polyvinylbutyral précipite entre 10 et 90 minutes après le début de cette introduction ; le mélange résultant est maintenu sous agitation pendant une durée supérieure à 30 minutes à une température de 8 à 15 °C, la température du mélange est ensuite élevée jusqu'à une valeur maintenue entre 60 et 80 °C en un laps de temps compris entre une heure et demie et 4 heures ; lorsque ladite valeur de température est atteinte, on incorpore une base dans le mélange jusqu'à obtention d'un pH compris entre 9 et 11, la température est maintenue ensuite à ladite valeur pendant une durée supérieure à un quart d'heure et le polyvinylbutyral précipité est ensuite séparé du mélange.

Les méthodes d'essais utilisées pour montrer les avantages de la présente invention sont décrites ci-après.

Compatibilité

La compatibilité du système résine-plastifiant est déterminée en extrudant à une température de 175 °C les quantités appropriées de plastifiant et de résine de PVB sous forme d'une feuille dont l'épaisseur est de 0,76 mm.

La feuille, fraîchement extrudée, est coupée en échantillons de 5 × 5 cm et mise dans une enceinte à 22 °C et 100 % d'humidité relative pendant 5 jours, délai au bout duquel les échantillons sont posés sur un papier. Si l'échantillon ne tache pas le papier, le plastifiant n'exsude pas et il est dit compatible avec la résine.

Fluage en compression

On utilise pour ce test une presse à plateaux chauffants. Un échantillon de feuille de PVB plastifié avant une épaisseur de 0,76 mm est découpé à l'emporte-pièce sous forme d'un disque de 26 mm de diamètre. Le disque est placé entre deux lames de verre de 60 × 60 mm. L'ensemble est mis entre les plateaux, maintenus à 125 °C, de la presse chauffante. Après 5 minutes de préchauffage sans appliquer de pression, l'échantillon verre-PVB plastifié-verre est soumis pendant 5 minutes à une pression de 10 bars. Si D représente le diamètre en millimètres du disque de polyvinylbutyral pressé, ce fluage est déterminé par la formule :

$$F = 100 \cdot \frac{D - 26}{26}$$

Résistance au choc à différentes températures (test de la chute de billes).

Cet essai est effectué avec une bille d'acier d'un poids de 5 livres anglaises (2,270 kg), que l'on fait tomber sur la partie centrale d'un échantillon plan de verre feuilleté reposant en position horizontale sur un cadre en bois. L'échantillon de verre feuilleté mesure 305 × 305 mm et les feuilles de verre ont 3 mm d'épaisseur.

Les échantillons de verre feuilleté utilisés dans ce test et les suivants sont préparés comme suit : une feuille de polyvinylbutyral plastifié de 0,76 mm d'épaisseur est préalablement conditionnée en humidité, puis placée entre deux feuilles de verre de 305 × 305 mm ; ce complexe est alors comprimé sous une pression de 10 bars, à 138 °C, pendant 20 minutes, en autoclave. Ils sont ensuite conditionnés pendant 24 heures à une température bien déterminée, soit − 10 °C, ou + 21 °C ou + 40 °C.

L'essai est conduit à des hauteurs croissantes de chute de la bille. On détermine la hauteur approximative pour laquelle plus de 90 % des échantillons testés à la température choisie résistent à la chute de la bille sans être traversés.

Pummel test (adhésivité à des feuilles)

Un échantillon de verre feuilleté d'environ 150 × 300 mm est conditionné pendant 8 heures à − 18 °C. Cet échantillon est ensuite posé sur un support incliné à 45° et frappé avec un marteau à tête plate de 0,450 kg jusqu'à ce que le verre soit pulvérisé. La surface d'essai est d'environ 100 × 150 mm et les coups de marteau sont répartis sur toute la surface. La quantité de verre restant collée à la feuille de polyvinylbutyral plastifié est comparée à une échelle de standards « Pummel » notés de 0 à 10.

L'essai s'effectue sur les deux faces du verre feuilleté et ce résultat s'exprime par conséquent par deux valeurs de l'échelle « Pummel » déterminées de la manière suivante :

(Voir Tableau, page 4)

| % de surface de la feuille de PVB plastifié dont le verre s'est décollé lors de la casse | Valeurs « Pummel » |
|---|---|
| 100 | 0 |
| 95 | 1 |
| 90 | 2 |
| 85 | 3 |
| 60 | 4 |
| 40 | 5 |
| 20 | 6 |
| 10 | 7 |
| 5 | 8 |
| 2 | 9 |
| 0 | 10 |

Les exemples suivants n'ont aucun caractère limitatif. Ils visent seulement à illustrer l'utilisation de l'adipate de benzyle et d'octyle, l'adipate de benzyle et de butyle l'adipate de benzyle et de décyle, l'adipate de benzyle et d'hexyle.

Les résines ont été préparées comme il est dit dans la publication française précitée.

Le polyvinylburytal plastifié est obtenu par mélange de la résine de PVB avec le plastifiant, l'adipate d'alkyle et de benzyle. La quantité de plastifiant peut varier en fonction des propriétés désirées du PVB plastifié. On utilise généralement le plastifiant dans des proportions telles que la teneur en plastifiant du PVB plastifié est comprise entre 15 et 65 %.

La plastification s'effectue d'après les méthodes classiques bien connues de l'homme de métier.

On peut par exemple placer la résine de PVB dans un mélangeur et ajouter la quantité déterminée de plastifiant, progressivement et sous agitation. Le mélange peut s'effectuer à température ordinaire et durant 30 minutes environ, mais aussi à des températures plus élevées. On peut aussi utiliser la méthode décrite dans FR-A-2 235 631.

On peut encore utiliser les mélangeurs décrits dans l'article paru dans la revue les Techniques de l'Ingénieur (référence J 1930).

Après mélange, on obtient une masse que l'on peut extruder pour fabriquer des feuilles ayant par exemple une épaisseur de 0,76 mm. Ces feuilles sont utilisées comme couches intercalaires dans des vitrages feuilletés.

Exemples 1 à 44

Ces exemples illustrent l'emploi d'adipate d'alkyle et de benzyle tels que les BOA, BBA, BHA, avec des résines de PVB qui diffèrent quant à leur teneur en groupements hydroxyles.

L'adipate de benzyle et d'octyle utilisé est par exemple le produit commercialisé par la société BAYER sous l'appellation ADIMOLL BO. Les autres adipates ont été synthétisés d'après les méthodes classiques d'estérification, à partir d'acide adipique, d'alcool benzylique, et d'alcool butylique pour le BBA par exemple et avec les composants adéquats pour le BHA et le BDA. Ces produits sont ensuite purifiés.

Pour mettre en évidence les bons résultats procurés par les adipates selon l'invention, on compare ces résultats à ceux procurés par d'autres adipates connus de la technique comme étant des plastifiants et notamment l'adipate de di(éthyl-2-hexyle) (DOA) et l'adipate de dihexyle (DHA).

Pour chacun des exemples 1 à 44, le Tableau 1 ci-après donne dans la première colonne le numéro de l'exemple, dans la colonne 2 la teneur en % de PVA résiduel dans la résine de PVB, dans la colonne 3 le plastifiant utilisé, dans la colonne 4 le taux de plastifiant introduit dans la résine PVB et exprimé en parties pour cent de résine (P.C.R.), la colonne 5 donne pour chaque exemple les résultats du test de compatibilité ; la colonne 6 donne des valeurs de fluage.

Tableau 1

| Exemple n° | % PVA résiduel | Nature du plastifiant | Taux de plastifiant en P.C.R. | Compatib. | Fluage % |
|---|---|---|---|---|---|
| 1 | 12 | BOA | 65 | oui | — |
| 2 | 13 | BOA | 40 | oui | — |
| 3 | 13 | BOA | 50 | oui | — |
| 4 | 18,2 | BOA | 32 | oui | 68 |

Tableau 1 (suite)

| Exemple n° | % PVA résiduel | Nature du plastifiant | Taux de plastifiant en P.C.R. | Compatib. | Fluage % |
|---|---|---|---|---|---|
| 5 | 18,2 | BOA | 37 | oui | 72 |
| 6 | 18,2 | BOA | 40 | oui | 74 |
| 7 | 18,2 | BOA | 44 | oui | 85 |
| 8 | 18,7 | BOA | 40 | oui | — |
| 9 | 18,7 | BOA | 42 | oui | 71 |
| 10 | 20,4 | BOA | 30 | oui | 60 |
| 11 | 20,4 | BOA | 32 | oui | 63 |
| 12 | 20,4 | BOA | 35 | oui | 65 |
| 13 | 20,9 | BOA | 45 | non | 76 |
| 14 | 20,9 | BOA | 34 | oui | 61 |
| 15 | 18,7 | BBA | 40 | oui | — |
| 16 | 18,7 | BBA | 60 | oui | — |
| 17 | 18,7 | BBA | 100 | oui | — |
| 18 | 20,9 | BBA | 35 | oui | 60 |
| 19 | 20,9 | BBA | 40 | oui | — |
| 20 | 20,9 | BBA | 44 | oui | 73 |
| 21 | 20,9 | BBA | 80 | oui | 127 |
| 22 | 20,9 | BBA | 100 | oui | — |
| 23 | 20,9 | BBA | 120 | non | — |
| 24 | 18,7 | BHA | 40 | oui | — |
| 25 | 18,7 | BHA | 50 | oui | 96 |
| 26 | 18,7 | BHA | 100 | oui | — |
| 27 | 20,9 | BHA | 30 | oui | — |
| 28 | 20,9 | BHA | 35 | oui | 63 |
| 29 | 20,9 | BHA | 40 | oui | — |
| 30 | 20,9 | BHA | 60 | oui | — |
| 31 | 20,9 | BHA | 85 | oui | — |
| 32 | 20,9 | BHA | 90 | non | — |
| 33 | 20,9 | BDA | 20 | oui | 46 |
| 34 | 20,9 | BDA | 25 | non | — |
| 35 | 18,2 | DHA | 32 | oui | 64 |
| 36 | 18,6 | DHA | 34 | oui | 65 |
| 37 | 20,4 | DHA | 32 | oui | 55 |
| 38 | 20,4 | DHA | 40 | non | 60 |
| 39 | 20,9 | DHA | 32 | oui | 54 |
| 40 | 20,9 | DHA | 34 | non | — |
| 41 | 20,4 | DOA | 20 | oui | 45 |
| 42 | 20,4 | DOA | 25 | non | — |
| 43 | 20,4 | DOA | 35 | non | 60 |
| 44 | 20,4 | DOA | 40 | non | 65 |

Les exemples 1 à 44 montrent que les adipates d'alkyle et de benzyle ont une bonne compatibilité avec des résines de PVB ayant les teneurs en groupements hydroxyles différentes. Les adipates de benzyle et butyle, benzyle et hexyle, benzyle et octyle, benzyle et décyle ont des compatibilités supérieures à celles des adipates dialkyliques connus. Les fluages mesurés sont satisfaisants pour les applications aux vitrages feuilletés de haute performance. A mesure que la teneur en groupements hydroxyles augmente dans la résine, la quantité de plastifiant nécessaire est plus grande pour obtenir une valeur de fluage désirée ainsi que le montrent les exemples 4, 11 et 14. Par ailleurs, la compatibilité des plastifiants diminue à mesure que le nombre de carbone de la chaîne alkylique croît.

Exemples 45 à 54

Ces exemples illustrent la propriété des adipates d'alkyle et de benzyle selon l'invention, de donner aux vitrages feuilletés une bonne résistance au choc, notamment à basse température.

Il est connu que les plastifiants contenant un groupement aryle, par exemple les phtalates, ne donnent pas de propriétés de résistance au choc à basse température comme le montrent les essais 48 à 51. En outre l'exemple 54 met en évidence la très mauvaise résistance aux chocs à froid de l'adipate de dibenzyle. Les adipates d'alkyle et de benzyle permettent une bonne résistance aux chocs à la fois à

température ordinaire et à basse température, tout en conservant un bon collage mesuré par le « Pummel test » et un fluage élevé.

Dans le tableau 2 qui suit, la première colonne indique le numéro de l'essai, la seconde colonne indique le plastifiant rajouté à la résine de PVB, la troisième colonne indique la teneur en plastifiant exprimée en parties de plastifiant pour 100 parties de résine (P.C.R.) comme dans le tableau 1, les colonnes 4 et 5 indiquent les résultats des tests de chute de bille exprimés pour chaque exemple en pieds et en mètres, la colonne 4 correspondant à des essais effectués à − 10 °C et la colonne 5 à + 20 °C, la colonne 6 indique la valeur obtenue pour les tests « Pummel » et la colonne 7 indique les propriétés de fluage.

Tableau 2

| Exemples | Plastifiant | Teneur en plastifiant (P.C.R.) | Test de chute de bille − 10 °C | Test de chute de bille + 20 °C | Pummel | Fluage % |
|---|---|---|---|---|---|---|
| 45 | BOA | 40 | 16 p<br>4,9 m | 22 p<br>6,7 m | 8 + 8 | 74 |
| 46 | BOA | 37 | 9 p<br>2,75 m | 24 m<br>7,3 m | 8 + 8 | 72 |
| 47 | BHA | 36 | 5 p<br>1,5 m | 25 p<br>7,5 m | | 65 |
| 48 | phtalate de dibutyle | 40 | 2 p<br>0,6 m | 21 p<br>6,4 m | 6 + 6 | 65 |
| 49 | phtalate de di-isobutyle | 40 | 1 p<br>0,3 m | 12 p<br>3,6 m | 8 + 9 | 65 |
| 50 | phtalate de di(éthyl-2-hexyle) | 40 | 1 p<br>0,3 m | 17 p<br>5,1 m | 8 + 9 | 60 |
| 51 | phtalate de butyle et benzyle | 40 | 1 p<br>0,3 m | 25 p<br>7,5 m | 8 + 9 | 61 |
| 52 | adipate de di-hexyle | 33 | 8 p<br>2,4 m | 25 p<br>7,5 m | 8 + 9 | 65 |
| 53 | di(éthyl-2-bytyrate) de triéthylène glycol (FLEXOL 3GH) | 41 | 9 p<br>2,7 m | 22 p<br>6,6 m | 5 + 5 | 70 |
| 54 | dibenzyle | 36 | 1 p<br>0,3 m | 17 p<br>5,1 m | 5 + 5 | 56 |

Les vitrages feuilletés préparés selon l'invention avec un intercalaire de PVB plastifié avec de l'adipate d'alkyle et de benzyle présentent des résultats satisfaisants pour les tests de résistance à l'eau bouillante, selon la norme DIN 52308, de résistance au vieillissement dans des stations climatiques.

L'invention envisage également l'utilisation de différents additifs dans les intercalaires de PVB plastifiés de l'invention. De tels additifs comprennent des colorants, des pigments, des stabilisants, des antioxydants, des antiultraviolets, des modificateurs d'adhérence, etc...

L'invention n'est naturellement pas limitée aux modes de réalisation décrits qui ont été donnés à titre d'exemples.

## Revendications

1. Polyvinylbutyral plastifié comprenant une résine de masse moléculaire de 30 000 à 600 000, ayant

une teneur inférieure à 5 % en poids de groupements esters résiduels calculée comme acétate de polyvinyle et une teneur en hydroxyle de l'ordre de 12 à 25 % en poids calculée comme alcool polyvinylique et un plastifiant, caractérisé en ce que le plastifiant comprend un adipate d'alkyle et de benzyle de formule générale

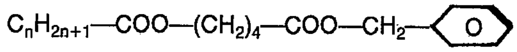

n étant compris entre 4 et 10.

2. Polyvinylbutyral plastifié selon la revendication 1, caractérisé en ce que le plastifiant est choisi parmi l'adipate de benzyle et d'octyle, l'adipate de benzyle et d'hexyle, l'adipate de benzyle et de butyle, l'adipate de benzyle et de décyle.

3. Polyvinylbutyral plastifié selon la revendication 2, caractérisé en ce que l'adipate est l'adipate de benzyle et d'octyle.

4. Polyvinylbutyral plastifié selon une des revendications 1 à 3, caractérisé en ce que le polyvinylbutyral est préparé par réaction d'alcool polyvinylique en solution aqueuse et d'aldéhyde butyrique suivant un procédé comprenant les opérations suivantes, ladite solution aqueuse comprenant entre 8 et 15 % en poids d'alcool polyvinylique, en incorporant un catalyseur acide et un émulsifiant, en introduisant dans le mélange ainsi obtenu, maintenu entre 5 et 12 °C et sous agitation de l'aldéhyde butyrique en quantité suffisante pour réagir avec 75 à 88 % de l'alcool polyvinylique du mélange, l'introduction de l'aldéhyde butyrique s'effectuant progressivement pendant une durée telle que le polyvinylbutyral précipite entre 10 et 90 minutes après le début de cette introduction, en maintenant le mélange résultant sous agitation pendant une durée supérieure à 30 minutes à une température de 8 à 15 °C en élevant ensuite la température du mélange jusqu'à une valeur maintenue entre 60° et 80 °C en un laps de temps compris entre une heure et demie et 4 heures, puis, lorsque ladite valeur de température est atteinte, en incorporant une base dans le mélange jusqu'à obtention d'un pH compris entre 9 et 11, pour maintenir enfin la température à ladite valeur pendant une durée supérieure à un quart d'heure, avant de séparer du mélange le polyvinylbutyral précipité.

5. Polyvinylbutyral plastifié selon une des revendications 1 à 4, caractérisé en ce que la teneur en plastifiant est comprise entre 15 et 65 % du poids total du polyvinylbutyral plastifié.

6. Intercalaire pour un vitrage feuilleté de sécurité en ce qu'il comprend essentiellement un polyvinylbutyral plastifié selon une des revendications 1 à 5.

7. Vitrage feuilleté de sécurité, notamment vitrage de véhicules de transport, de bâtiment, verres de lunettes, masques, écran, lentilles, caractérisé en ce qu'il comprend un intercalaire selon la revendication 6.

**Claims**

1. Plastified polyvinylbutyral comprising a resin of molecular weight from 30,000 to 600,000, having a content of residual ester groups calculated as polyvinyl acetate less than 5 % by weight and a content of hydroxyl calculated as polyvinyl alcohol of the order of 12 to 25 % by weight and a plastifier, characterised in that the plastifier comprises an alkyl benzyl adipate of general formula

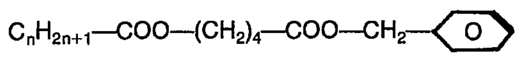

n being from 4 to 10.

2. Plastified polyvinylbutyral according to claim 1, characterised in that the plastifier is chosen from octyl benzyl adipate, hexyl benzyl adipate, butyl benzyl adipate, and decyl benzyl adipate.

3. Plastified polyvinylbutyral according to claim 2, characterised in that the adipate is octyl benzyl adipate.

4. Plastified polyvinylbutyral according to one of claims 1 to 3, characterised in that the polyvinylbutyral is prepared by reaction of polyvinylalcohol in aqueous solution and butyric aldehyde in a process comprising the following operations, said aqueous solution comprising from 8 to 15 % by weight of polyvinyl alcohol, incorporating an acid catalyst and an emulsifier, introducing into the mixture thus obtained, held at a temperature from 5 to 12 °C, under agitation, butyric aldehyde in an amount sufficient to react with 75 to 88 % of the polyvinyl alcohol in the mixture, introduction of the butyric aldehyde being carried out progressively over a duration such that the polyvinylbutyral precipitates from 10 to 90 minutes after the start of this introduction, holding the resulting mixture under agitation for a time greater than 30 minutes at a temperature from 8 to 15 °C, and then raising the temperature of the mixture to a value held from 60° to 80 °C over a period of time from 1 1/2 to 4 hours and then, when said value of the temperature is reached, incorporating in the mixture a base so that a pH from 9 to 11 is obtained, and maintaining the temperature at said value for a time greater than 1/4 hour before separating the precipitated polyvinylbutyral from the mixture.

5. Plastified polyvinylbutyral according to one of claims 1 to 4, characterised in that the content of plastifier is from 15 to 65 % of the total weight of the plastified polyvinylbutyral.

6. Intermediate layer for a laminated safety pane, characterised in that it comprises essentially a plastified polyvinylbutyral according to one of claims 1 to 5.

7. Laminated safety pane, especially a pane for transport vehicles, buildings, prescription lenses, masks, screens, lenses, characterised in that it comprises an intermediate according to claim 6.

**Ansprüche**

1. Plastifiziertes Polyvinylbutyral, enthaltend ein Harz vom Molekulargewicht von 30 000 bis 600 000 mit einem Gehalt unter 5 Gew.-% an Esterrestgruppen, berechnet als Polyvinylacetat, und einem Hydroxylgehalt in der Größenordnung von 12 bis 25 Gew.-%, berechnet als Polyvinylakohol, und einem Plastifizierungsmittel, dadurch gekennzeichnet, daß das Plastifizierungsmittel aus einem Alkyl- und Benzyladipat der allgemeinen Formel

$$C_nH_{2n+1}—COO—(CH_2)_4—COO—CH_2—$$ 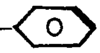

mit n zwischen 4 und 10 besteht.

2. Plastifiziertes Polyvinylbutyral nach Anspruch 1, dadurch gekennzeichnet, daß das Plastifizierungsmittel aus Benzyl- und Octyladipat, Benzyl- und Hexyladipat, Benzyl- und Butyladipat oder Benzyl- und Decyladipat besteht.

3. Plastifiziertes Polyvinylbutyral nach Anspruch 2, dadurch gekennzeichnet, daß das Adipat das Benzyl- und Octyladipat ist.

4. Plastifiziertes Polyvinylbutyral nach einem der Ansprüche 1 bis 3, dadurch gekennzeichnet, daß das Polyvinylbutyral hergestellt ist durch die Umsetzung von Polyvinylalkohol in wässriger Lösung mit Butyraldehyd entsprechend einem Verfahren, das folgende Arbeitsschritte aufweist: die wässrige Lösung enthält zwischen 8 und 15 Gew.-% Polyvinylalkohol ; in sie wird ein saurer Katalysator und ein Emulgator eingeführt ; in die so erhaltene Mischung wird unter Aufrechterhaltung einer Temperatur zwischen 5 und 12° und unter Rühren das Butyraldehyd in solchen Mengen eingebracht, daß sie ausreichen, um sich mit 75 bis 88 % des in der Mischung befindlichen Polyvinylalkohols umzusetzen, wobei das Einbringen des Butyraldehyds fortschreitend während einer solchen Dauer stattfindet, daß das Polyvinylbutyral nach 10 bis 90 Minuten seit Beginn des Einbringens ausfällt ; die sich ergebende Mischung wird unter Rühren während einer Zeitdauer von 30 Minuten auf einer Temperatur von 8 bis 15 °C gehalten, worauf die Temperatur des Gemisches auf einen Wert zwischen 60° und 80° gesteigert und über eine Zeitdauer zwischen 1 1/2 Stunden und 4 Stunden gehalten wird, worauf man, nachdem der gewünschte Temperaturwert erreicht ist, eine Base in das Gemisch einführt, bis man einen pH-Wert zwischen 9 und 11 erhält, um schließlich die Temperatur auf diesem Wert über eine Zeitdauer von einer 1/4 Stunde zu halten, bevor man das ausgefällte Polyvinylbutyral, vom Gemisch abtrennt.

5. Plastifiziertes Polyvinylbutyral nach einem der Ansprüche 1 bis 4, dadurch gekennzeichnet, daß der Gehalt an Plastifizierungsmittel zwischen 15 und 65 Gew.-% des gesamten plastifizierten Polyvinylbutyrals beträgt.

6. Zwischenschicht für Mehrscheibensicherheitsgläser, dadurch gekennzeichnet, daß sie im wesentlichen aus einem plastifizierten Polyvinylbutyral nach einem der Ansprüche 1 bis 5 besteht.

7. Mehrscheibensicherheitsglasscheibe, insbesondere für Transportfahrzeuge, Wasserfahrzeuge, Brillengläser, Masken, Bildschirme, Linsen u.dgl., dadurch gekennzeichnet, daß sie eine Zwischenschicht nach Anspruch 6 aufweist.